# EUROPEAN PATENT APPLICATION

(11) **EP 0 737 422 A2**
(43) Date of publication of application: **16.10.1996**
(21) Application number: 96105578.7
(22) Date of filing: 09.04.1996
(51) Int. Cl.: A01N 65/00

(54) **Use of incense in the agronomical field**

(30) Priority: 11.04.1995 IT TO950286
(71) Applicant: Pecchiai, Maria Enrica, 20124 Milano (IT)
(72) Inventor: Pecchiai, Luciano, 20124 Milano (IT)
(74) Representative: Bosotti, Luciano

(57) **Abstract**

The use of incense in the field of agronomics, for example for the metabolic trophism of plants and protection against cryptogamous and parasitic pathology, is described. Association with propolis is also proposed.

## Description

### Field of the Invention

The present invention relates to incense and concerns specifically a novel use of incense which is a natural product obtained from Boswellia plants.

Incense is formed from gum-resins and essential oils having a high content of terpenes (monoterpenes, triterpenes and sesquiterpenes) which, because they are derived from the fusion of two or more isoprene molecules, are considered to be hydrocarbons.

### Description of the prior art

The use of incense, which is mainly used in the form of fumes released by the combustion of incense on charcoal or coal, or by burning incense in the form of sticks, has its origin in a very old tradition which is particularly well established in the Orient and also has a ritual value.

There is also documentary evidence from ancient Egypt of the use of incense for curing cutaneous, pulmonary, digestive and ocular diseases.

More recently, incense, or its active ingredient (boswellic acid) which is extracted from incense and incorporated in ointments, has been used by way of percutaneous absorption for the treatment of inflammatory processes in human and veterinary medicine.

The principal medical indication is that of inflammatory processes caused by the increased formation of leucotrienes. In the human field, the use of incense has been proposed especially in the case of inflammatory diseases of the joints, epidermal lesions (psoriasis), intestinal disorders of inflammatory origin (ulcerative colitis, Crohn's disease) chronic hepatitis, allergic forms of asthma and endotoxic shock).

From a biochemical point of view, inflammation is caused by the release of so-called inflammation mediators (prostaglandins, leucotrienes, histamines, bradykinins and complementary factors). It is also known that both prostaglandins and leucotrienes are derived from a polyunsaturated fatty acid, that is to say, arachidonic acid, which is present in seed oils. It should also be remembered that the terpenes present in resins and essential oils of plant origin are capable of preventing the synthesis of leucotrienes at the site of inflammation. In the light of these biochemical facts associated with the physiopathology of inflammation, it is clear that the mechanism characterising the inflammation of animal tissues is a very complex one.

### Aims and summary of the invention

The present invention, having the characteristics claimed in the claims which follow, is aimed at extending the possible fields of use of incense and is based on the recognition that, in a totally unexpected manner, incense (this term is to be understood here as also including the related active ingredient and related derivatives, also obtained by chemical means) also has unforeseen advantages when used in the agronomic field, for the metabolic trophism of plants and for protection against cryptogamous and parasitic pathology.

Probably, but without wishing to be bound to any specific theory, it may be asserted that, because arachidonic acid is also present in plant oils, and terpenes are present in essential oils and in the gum-resins produced by plants, particularly for the protection of the flower buds and the plant apices, if specific substances of plant origin perform preventive and curative functions in respect of some pathologies in the animal field, they can also perform a probiotic, preventive and curative biological function in the face of similar pathologies in the field of plants, these pathologies of course exhibiting different characteristics.

### Detailed description of the invention

As specifically regards the field of agronomics, the principal indication of use of the invention is that of "inflammatory" plant processes that are associated with disturbances in water exchange and in the circulation of lymph, as occurs, for example, in the process which causes apical rot in fruits such as tomatoes, or "dry disease", for example of the rachis of grapes, gummosis of peaches and apricots, the excessive accumulation of water in fruits, etc. As regards the modes of use, incense can be used in an effective amount for dusting, in oily form, in the form of an extract with alcohol, with water or in another solvent optionally in vapour phase in fruit and vegetable crops or flowers and plants in general.

It has been found advantageous to use incense for the preservation of products during storage.

In a synergic manner, incense can be associated also with propolis, in powder form or in solution. It will be remembered that terpenes are present in the essential oil, in the waxy-resinous substance and in the gum-resin of propolis. Incense can also be associated with foliar nutrients or with substances having an anti-cryptogamous and/or anti-parasitic action.

Finally, flower buds and essential oils (eucalyptus, pine, cypress, juniper, sandalwood, camphor, musk, etc.) and, in general, those essential oils which form part of the incense paste used in the Orient for the preparation of incense sticks, may be added to the incense.

Naturally, the principle of the invention remaining the same, the details of performance and forms of embodiment may vary widely with respect to those described and illustrated, without thereby departing from the scope of the present invention.

## Claims

1. The use of incense in the field of agronomics, especially, but not exclusively, for the metabolic trophism of plants and protection against cryptogamous and parasitic pathology.

2. The use according to Claim 1 with incense in powder form, in oily form, in the form of an alcoholic or aqueous extract or in another solvent or in vapour phase.

3. The use according to Claim 1 or Claim 2, with the association of propolis with the incense.

4. A process for the treatment of plant products, such as, for example, fruit and vegetable products or flower products, characterised in that it comprises the operation of applying an effective amount of incense to the product.

5. A process according to Claim 4, characterised in that the incense is applied to the product in powder form, in oily form, in the form of an alcoholic or aqueous extract or in another solvent or in vapour phase.

6. A process according to Claim 4 or Claim 5, characterised in that the incense is applied in combination with an effective amount of propolis.
